# EUROPÄISCHE PATENTSCHRIFT

(11) **EP 3 858 204 B1**
(45) Veröffentlichungstag und Bekanntmachung des Hinweises auf die Patenterteilung: **02.10.2024**
(21) Anmeldenummer: 20154064.8
(22) Anmeldetag: 28.01.2020
(51) Int. Cl.: A47J 43/046, A47J 43/07, A47J 43/08

(54) **SYSTEM UMFASSEND EIN RÜHRGERÄT UND EINE KÜCHENMASCHINE**
SYSTEM COMPRISING A MIXING DEVICE AND A KITCHEN APPLIANCE
SYSTÈME COMPRENANT UN APPAREIL D'AGITATION ÉLECTROMÉNAGER ET UN ROBOT MÉNAGER

(43) Veröffentlichungstag der Anmeldung: 04.08.2021
(73) Patentinhaber: Vorwerk & Co. Interholding GmbH, 42275 Wuppertal (DE)
(72) Erfinder: Pohl, Stephan, 42113 Wuppertal (DE); Lang, Torsten, 42657 Solingen (DE); Stroh, Simon, 42653 Solingen (DE)
(74) Vertreter: Gille Hrabal Partnerschaftsgesellschaft mbB Patentanwälte

(56) Entgegenhaltungen:
- EP-A1- 2 901 903
- WO-A2-2014/201509
- US-A1- 2019 038 078
- US-A1- 2019 208 961
- ANONYMOUS: "Schrittmotor - Wikipedia", 17 June 2015 (2015-06-17), XP055307812, Retrieved from the Internet <URL:https://de.wikipedia.org/w/index.php?title=Schrittmotor&oldid=143174975> [retrieved on 20161005]

## Beschreibung

Die Erfindung betrifft ein System für einen Haushalt mit einer Küchenmaschine und einem Rührgerät. Mit einem Rührwerkzeug können Zutaten einer Speise, die sich in dem Gefäß befinden, gerührt werden.

Aus der Druckschrift EP 1 639 928 A1 ist eine Küchenmaschine mit einem Gefäß bekannt. Das Gefäß weist einen Messersatz auf. Die Küchenmaschine kann Zutaten einer Speise, die sich in dem Gefäß befinden, zerkleinern, malen oder lediglich rühren. Damit Zutaten einer Speise zerkleinert werden können, muss der Messersatz mit hoher Drehgeschwindigkeit und großem Drehmoment in Richtung seiner scharfen Kante gedreht werden können. Entsprechend leistungsstark ist der elektrische Antrieb einer solchen Küchenmaschine ausgewählt.

Die Druckschrift WO 2014/201509 A2 bezieht sich auf einen Kochapparat mit einem beheizbaren Gefäß und einer drehbaren Klingenanordnung. Der Kochapparat umfasst zwei Motoren, die für unterschiedliche Drehgeschwindigkeiten vorgesehen sind. Ein Motor für sehr niedrige Drehgeschwindigkeiten kann ein Schrittmotor sein.

Aus der Druckschrift CH 702 302 A2 ist ein Rührwerk für eine Küchenmaschine mit einem Permanent-Synchronmotor bekannt. Der Permanent-Synchronmotor umfasst eine Mehrzahl von Permanentmagneten, die in gleichmäßigen Abständen am Umfang des Rotors des Elektromotors angeordnet sind.

Ein Rührgerät, welches ein Gefäß und ein Rührwerkzeug umfasst, ist aus der Druckschrift DE 10 2009 016 897 A1 bekannt. Das Rührwerkzeug ist in ein Aufsatzteil für das Gefäß integriert. Das Aufsatzteil umfasst als Antrieb einen Piezo-Schrittmotor. Ein Piezo-Schrittmotor ist relativ klein und leicht.

US 2019 / 208 961 A1 beschreibt einen Mixer mit einem Mixmesser, welches von einem Motor angetrieben wird. Der Mixer umfasst ferner ein Gehäuse mit einer Lufteinlassöffnung, einen Diffusor, und ein Gebläse, das im Betrieb Luft durch die Lufteinlassöffnung, um den Diffusor und durch die Diffusoröffnung drückt.

Bei der Zubereitung von ein oder mehreren Speisen besteht regelmäßig Bedarf, erste Zutaten rühren und zweite Zutaten zerkleinern und/oder rühren zu müssen. ist nur eine Küchenmaschine vorhanden, so müssen diese Schritte zeitlich hintereinander durchgeführt werden. Durch Vorsehen einer zweiten Küchenmaschine könnte zwar dieses Problem gelöst werden. Eine zweite Küchenmaschine zur Lösung des Problems vorzusehen, ist jedoch aus Kostengründen und Platzgründen wenig zweckmäßig.

Durch die vorliegende Erfindung soll die Zubereitung einer Speise vereinfachen und beschleunigen. Es soll vorzugsweise ein Rührgerät mit geringem Platzbedarf geschaffen werden.

Zur Lösung des Problems wird ein System umfassend eine Küchenmaschine und ein Rührgerät mit den Merkmalen des ersten Patentanspruchs vorgesehen. Vorteilhafte Ausgestaltungen ergeben sich aus den abhängigen Ansprüchen.

Die Erfindung betrifft ein System umfassend eine Küchenmaschine und ein Rührgerät und mindestens ein Gefäß mit einem darin befindlichen Rührwerkzeug. Das Gefäß kann sowohl als Teil der Küchenmaschine als auch als Teil des Rührgeräts verwendet werden. Die Küchenmaschine ist so eingerichtet, dass das Rührwerkzeug von der Küchenmaschine mit höheren Drehzahlen gedreht werden kann im Vergleich zu den Drehzahlen, die mit dem Rührgerät maximal möglich sind. Es ist dadurch möglich, das Gefäß in Abhängigkeit vom Bedarf auch während einer Zubereitung einer Speise zunächst als Teil der Küchenmaschine und später als Teil des Rührgeräts einzusetzen oder umgekehrt. Sollen gleiche Zutaten bearbeitet werden, entfällt ein Umfüllen der Zutaten von dem Gefäß der Küchenmaschine in das Gefäß des Rührgeräts oder umgekehrt. Das Rührgerät umfasst als Antrieb für das Rührwerkzeug einen Schrittmotor.

Das System umfasst in einer Ausgestaltung ein zweites Gefäß, welches wie das bereits genannte Gefäß beschaffen ist. Wird eine Speise zunächst mithilfe der Küchenmaschine in dem erstgenannten Gefäß zubereitet und wird das Gefäß später beim Rührgerät wie zuvor beschrieben eingesetzt, so kann das zweite Gefäß genutzt werden, um mithilfe der Küchenmaschine beispielsweise parallel eine andere Speise zuzubereiten.

Die Küchenmaschine ist vorzugsweise so eingerichtet, dass die Drehrichtung des Rührwerkzeugs gewechselt werden kann. Die Küchenmaschine kann damit verbessert für ein reines Rühren und alternativ für ein Rühren und Zerkleinern von Zutaten einer Speise eingesetzt werden.

Rührgerät und/oder Küchenmaschine können eine elektronische Steuereinrichtung aufweisen. Der Betrieb der Küchenmaschine bzw. der Betrieb des Rührgerätes können bei Vorhandensein einer Steuereinrichtung durch die Steuereinrichtung gesteuert werden.

Vorzugsweise sind Rührgerät und/oder Küchenmaschine so eingerichtet, dass diese miteinander drahtlos Daten austauschen können. Ein Austausch von Daten kann dazu genutzt werden, um den Betrieb des Rührgeräts oder der Küchenmaschine mithilfe einer Steuereinrichtung zu steuern.

Die Küchenmaschine und/oder das Rührgerät können als Einrichtung für die Zubereitung einer Speise eine Heizeinrichtung aufweisen, mit der das Gefäß erwärmt werden kann. Die Küchenmaschine und/oder das Rührgerät können ein Steuerprogramm umfassen, mit der das Erwärmen des Gefäßes gesteuert werden kann. Die Heizeinrichtung kann eine elektrische Widerstandsheizung umfassen, um Hitze erzeugen zu können. Die Heizeinrichtung kann einen Temperatursensor umfassen, um Temperaturen erfassen, anzeigen und/oder steuern zu können.

Vorzugsweise umfasst das Gefäß eine Widerstandsheizung als Teil der Heizeinrichtung. Dies reduziert den technischen Aufwand, wenn eine Heizeinrichtung sowohl bei der Küchenmaschine als auch bei dem Rührgerät vorgesehen werden soll. Vorzugsweise umfasst das Gefäß einen Temperatursensor, um Temperaturen erfassen, anzeigen und/oder steuern zu können.

Als Einrichtung für die Zubereitung einer Speise können bei der Küchenmaschine und/oder bei dem Rührgerät eine Waage vorgesehen sein, mit der das Gewicht einer in das Gefäß hineingebrachten Zutat oder Speise gewogen werden kann. Die Küchenmaschine und/oder das Rührgerät können ein Steuerprogramm umfassen, mit der die Waage und damit das Wiegen gesteuert werden kann.

Als Einrichtung für die Zubereitung einer Speise können bei der Küchenmaschine und/oder bei dem Rührgerät ein optischer Sensor vorgesehen sein, mit dem eine in das Gefäß hineingebrachte Zutat optisch überwacht werden kann. Die Küchenmaschine und/oder das Rührgerät können ein Steuerprogramm umfassen, mit der der optische Sensor und damit das optische Überwachen gesteuert werden kann.

Nachfolgend wird ein Rührgerät beschrieben. Das Rührgerät kann grundsätzlich im System eingesetzt werden.

Das Rührgerät umfasst ein Standteil und ein Gefäß, welches in das Standteil eingesetzt werden kann oder in das Standteil integriert ist. Standteil meint ein Teil des Rührgeräts, welches für ein Aufstellen auf einem Untergrund, also zum Beispiel auf einer Arbeitsplatte, vorgesehen ist. Das Standteil kann daher an der Unterseite beispielsweise vorstehende Noppen aufweisen. Die Noppen kontaktieren im aufgestellten Zustand den Untergrund. Die Noppen können aus einem Elastomer bestehen, um das Standteil rutschfest aufstellen zu können und um Vibrationen zu dämpfen.

Das Standteil kann eine Ausnehmung aufweisen, welche einen unteren Bereich des Gefäßes aufnehmen kann. Form und Durchmesser der Ausnehmung können der Form und dem Durchmesser des unteren Bereichs des Gefäßes entsprechen, um das Gefäß sicher und zuverlässig durch das Standteil in einer gewünschten Position zu halten.

Ein Rührwerkzeug befindet sich im Gefäß. Das Rührwerkzeug kann sich beim Grund des Gefäßes befinden.

Das Standteil umfasst einen elektrischen Antrieb, mit dem das Rührwerkzeug angetrieben werden kann. Der elektrische Antrieb umfasst einen Schrittmotor. Ein Schrittmotor ist für einen Einsatz im Rührgerät besonders gut geeignet, da das Rührwerkzeug nur mit geringen Drehzahlen gedreht werden soll im Vergleich zu Drehgeschwindigkeiten bei einer Küchenmaschine. Das Rührwerk kann daher unmittelbar mit der Welle des Schrittmotors verbunden werden. Der Bauraum kann daher klein sein, so dass der zusätzliche Platzbedarf für das Rührgerät klein sein kann.

Vorzugsweise ist der elektrische Antrieb des Rührgeräts ein Hybridschrittmotor. Ein Hybridschrittmotor kann nur mit einer relativ geringen Drehzahl gedreht werden kann. Da das Rührgerät lediglich als Ergänzung dienen soll, um Rühraufgaben zu übernehmen, sind nur geringe Drehzahlen aus Sicherheitsgründen sogar von Vorteil.

Ein Hybridschrittmotor hat sich auch deshalb als geeignet herausgestellt, weil sein Drehmoment im Verhältnis zu seinem Gewicht gering ist, was aus Sicherheitsgründen ebenfalls von Vorteil ist. Von Vorteil ist weiter, dass das Drehmoment nicht oder zumindest kaum von der Drehzahl abhängt.

Ein Hybridschrittmotor ist vergleichsweise schwer und zwar insbesondere im Vergleich zu einem Piezoschrittmotor. Weil der elektrische Antrieb im Standteil untergebracht ist, trägt der Hybridschrittmotor zu einem relativ hohen Gewicht des Standteils bei. Ein relativ hohes Gewicht des Standteils ist von Vorteil, um für Standsicherheit während des Betriebs zu sorgen. Dennoch kann das Standteil im Vergleich zu einer üblichen Küchenmaschine klein sein. Dadurch können Platzprobleme in einem Haushalt vermieden werden.

Der elektrische Antrieb befindet sich grundsätzlich unterhalb des Gefäßes, wenn das Gefäß in das Standteil eingesetzt bzw. integriert und das Standteil bestimmungsgemäß aufgestellt ist.

Der elektrische Antrieb kann eine Mehrzahl von Permanentmagneten umfassen. Vorzugsweise umfasst der elektrische Antrieb jedoch einen Rotor mit nur einem Permanentmagneten. Der Montageaufwand kann so besonders geringgehalten werden.

Vorzugsweise umfasst der elektrische Antrieb einen Stator mit einer Ringform umfasst und einen Rotor innerhalb der Ringform. Diese Bauform eignet sich besonders gut, um eine Welle des elektrischen Antriebs mit dem Rührwerkzeug verbinden zu können.

Vorzugsweise stehen von der Ringform Segmente mit Zähnen nach Innen ab. Um jedes Segment ist eine Spule gewickelt. Der Rotor umfasst nach außen abstehende, magnetisch gepolte Zähne.

Vorzugsweise können Zähne des Stators Zähnen des Rotors genau gegenüberliegen. Gleichzeitigt können andere Zähne des Stators gegenüber anderen Zähnen des Rotors versetzt angeordnet sein.

Vorzugsweise umfasst der Rotor erste Zähne und zweite Zähne. Die ersten Zähne sind ein magnetischer Nordpol oder werden von einem ersten magnetischen Fluss eines Magneten durchsetzt. Die zweiten Zähne sind ein magnetischer Südpol oder werden von einem zweiten magnetischen Fluss eines Magneten durchsetzt und zwar in umgekehrter Richtung im Vergleich zum ersten magnetischen Fluss. Ein erster Zahn kann also durch den Nordpol eines Permanentmagneten gebildet sein. Ein zweiter Zahn kann durch den Südpol eines Permanentmagneten gebildet sein. Es kann aber auch ein Magnet so an die ersten und zweiten Zähne angrenzen, dass der durch den Magneten erzeugte magnetische Fluss die ersten und die zweiten Zähne durchsetzt. Der magnetische Fluss durch die ersten Zähne verläuft dann umgekehrt zum magnetischen Fluss durch die zweiten Zähne. Die ersten Zähne wirken dann beispielsweise wie ein magnetischer Nordpol. Die zweiten Zähne wirken dann wie ein magnetischer Südpol. Die ersten und die zweiten Zähne sind dann im Sinn der vorliegenden Erfindung magnetisch gepolt.

Erste und zweite Zähne bilden grundsätzlich den Außenumfang des Rotors. Ein erster Zahn befindet sich grundsätzlich zwischen zwei zweiten Zähnen und umgekehrt.

Der Rotor umfasst vorzugsweise einen ersten Rotationskörper aus ferromagnetischem Material, der mit den ersten Zähnen versehen ist. Der Rotor umfasst vorzugsweise einen zweiten Rotationskörper aus ferromagnetischem Material, der mit den zweiten Zähnen versehen. Der Nordpol eines Permanentmagneten reicht vorzugsweise in den ersten Rotationskörper hinein. Der Südpol des Permanentmagneten reicht vorzugsweise in den zweiten Rotationskörper hinein.

Die Zähne des Rotors sind an ihrer Oberseite vorzugsweise nach außen gewölbt. Die Zähne des Stators sind an ihrer Oberseite vorzugsweise nach innen gewölbt.

Das Rührwerkzeug umfasst vorzugsweise eine stumpfe Kante und eine gegenüberliegende scharfe Kante. Das Rührgerät ist so eingerichtet, dass das Rührwerkzeug nur in Richtung der stumpfen Kante gedreht werden kann. Indem das Rührgerät so eingerichtet ist, dass das Rührwerkzeug nur in Richtung der stumpfen Kante gedreht werden kann, wird ein unerwünschtes Zerkleinern einer Speise bzw. von Zutaten einer Speise vermieden. Außerdem trägt auch dies zur Sicherheit beim Rührgerät bei. Das Rührwerkzeug weist eine gegenüberliegende scharfe Kante auf, damit das Gefäß mit dem Rührwerkzeug auch in einer Küchenmaschine eingesetzt werden kann. Mithilfe der Küchenmaschine, die das Rührwerkzeug in umgekehrter Richtung drehen kann, können dann Zutaten einer Speise zerkleinert werden. Vorzugsweise ist der elektrische Antrieb durch eine lösbare Kupplung mit dem Rührwerkzeug verbunden ist. Die lösbare Kupplung befindet sich unterhalb des Gefäßbodens, wenn das Gefäß in die Ausnehmung des Standteils eingesetzt ist. Bei dieser Ausgestaltung kann das Gefäß vom Standteil gelöst werden. Bei einer solchen Ausgestaltung kann das Gefäß besonders einfach sowohl mit dem Standteil betrieben werden als auch mit einer entsprechend eingerichteten Küchenmaschine.

Vorzugsweise kann die Kupplung durch eine Linearbewegung entlang der Motorwelle gelöst werden. Das Gefäß kann dann vorteilhaft vom Standteil gelöst werden, indem das Gefäß angehoben, also nach oben von dem Standteil wegbewegt wird.

Es zeigen
- Figur 1:: Rührgerät mit Standteil und einsetzbarem Gefäß;
- Figur 2:: Rührwerkzeug;
- Figur 3:: Rührgerät mit Standteil und integriertem Gefäß;
- Figur 4:: axialer Schnitt durch einen Hybridschrittmotor;
- Figur 5:: transversaler Schnitt durch einen Hybridschrittmotor.

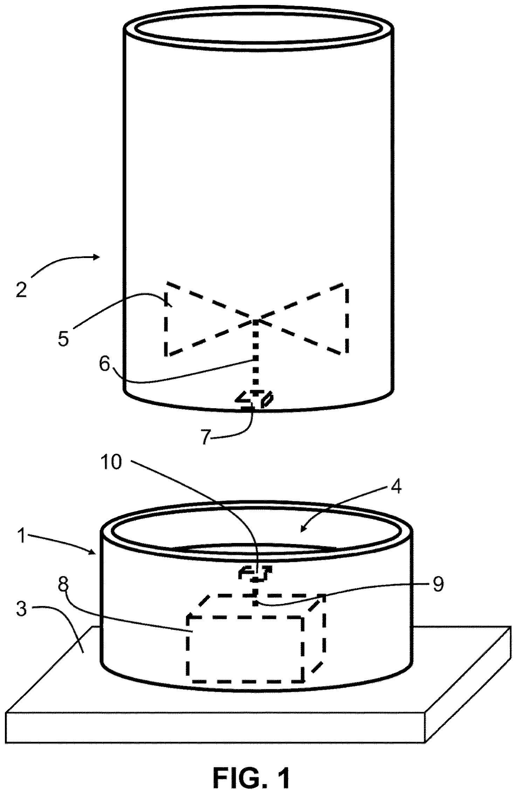

Die Figur 1 zeigt ein Rührgerät mit einem Standteil 1 und einem Gefäß 2. Das Standteil 1 ist auf einem Untergrund 3 aufgestellt. Das Standteil 1 weist eine Ausnehmung 4 auf, welche einen unteren Bereich des Gefäßes 2 aufnehmen kann. Das Gefäß 2 kann also in die Ausnehmung 4 eingesetzt werden. Form und Durchmesser der Ausnehmung 4 sind an die Form und den Durchmesser des unteren Bereichs des Gefäßes 2 angepasst, um das Gefäß 2 sicher und zuverlässig durch das Standteil 1 halten zu können. Die Ausnehmung kann kreisförmig sein, wie dies in der Figur 1 gezeigt wird. Der untere Bereich des Gefäßes 2 ist daher ebenfalls kreisrund, damit die beiden Formen aneinander angepasst sind. Der Außendurchmesser des unteren Bereichs des Gefäßes 2 ist geringfügig kleiner als der Innendurchmesser der Ausnehmung 4, damit das Gefäß 2 sicher durch das Standteil gehalten werden kann. Es können aber auch andere Formen vorgesehen sein. Vorzugsweise kann das Gefäß 2 drehfest in die Ausnehmung 4 eingesetzt werden. So können die Ausnehmung 4 und der untere Bereich des Gefäßes 2 dreieckig, viereckig, fünfeckig oder oval sein, damit das Gefäß 2 drehfest in das Standteil eingesetzt sein kann.

Ein durch gestrichelte Linien angedeutetes Rührwerkzeug 5 befindet sich im Gefäß 2 und zwar in der Nähe des Bodens des Gefäßes 2 und damit beim Grund des Gefäßes 2. Das Rührwerkzeug 5 kann durch eine Welle 6 gedreht werden. Die Welle 6 führt durch den Boden des Gefäßes 2 hindurch. Das nach unten weisende Ende der Welle 6 umfasst ein Kupplungsstück 7.

Das Standteil 1 umfasst einen durch gestrichelte Linien angedeuteten Elektromotor 8 mit einer Welle 9. Das nach oben weisende Ende der Welle 9 umfasst ein Kupplungsstück 10. Der Elektromotor 8 ist ein Hybridschrittmotor.

Wird das Gefäß 2 in die Ausnehmung 4 eingesetzt, so werden dadurch die beiden Kupplungsstücke 7 und 10 miteinander verbunden. Wird die Welle 9 des Motors 8 gedreht, so überträgt sich dann die Drehbewegung von der Welle 9 auf die Welle 6. Es wird folglich das Rührwerkzeug 5 gedreht. Ein Getriebe ist nicht erforderlich, weil durch einen Hybridschrittmotor geeignete Drehzahlen auch ohne ein Getriebe eingestellt werden können.

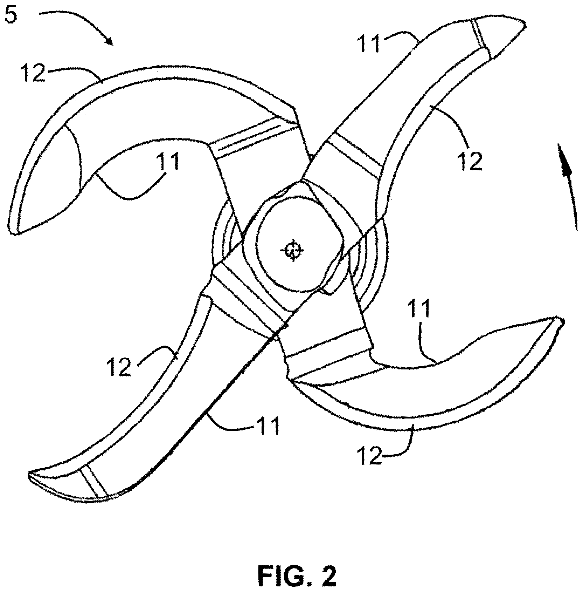

In der Figur 2 wird ein Beispiel für ein Rührwerkzeug 5 gezeigt, welches eine stumpfe Kante 11 und eine gegenüberliegende scharfe Kante 12 aufweist. Wird das Rührwerkzeug 11 wie durch einen Pfeil angedeutet entgegengesetzt zum Uhrzeigersinn gedreht, so wird das Rührwerkzeug 11 in Richtung der stumpfen Kante 11 gedreht. Ein Rührgerät ist grundsätzlich so eingerichtet, dass das Rührwerkzeug 11 nur in Richtung der stumpfen Kante 11 gedreht werden kann.

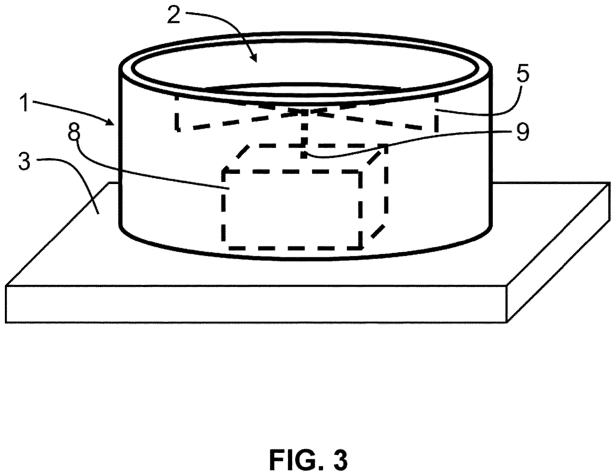

Die Figur 3 zeigt ein Beispiel für ein Rührgerät, bei dem das Gefäß 2 in das Standteil 1 integriert ist. Das Gefäß 2 ist also unlösbar mit dem Standteil 1 verbunden. Bei dieser Ausgestaltung kann das Rührwerkzeug 5 vorzugsweise von der Welle 9 des Motors 8 gelöst werden, um dieses abnehmen und leicht reinigen zu können.

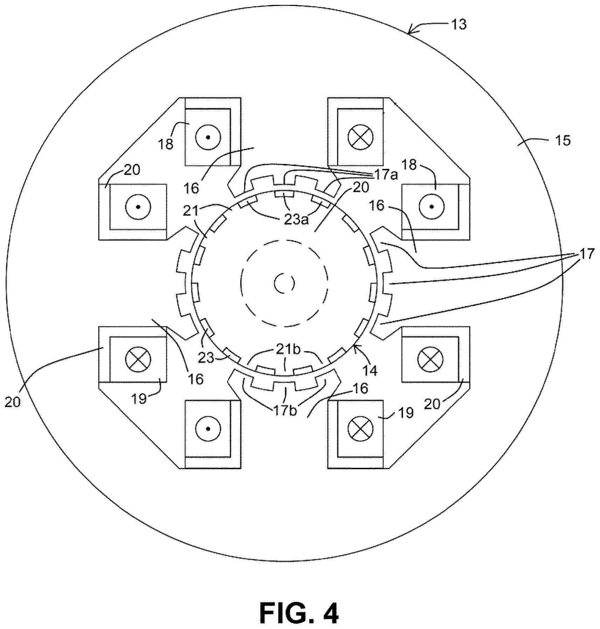

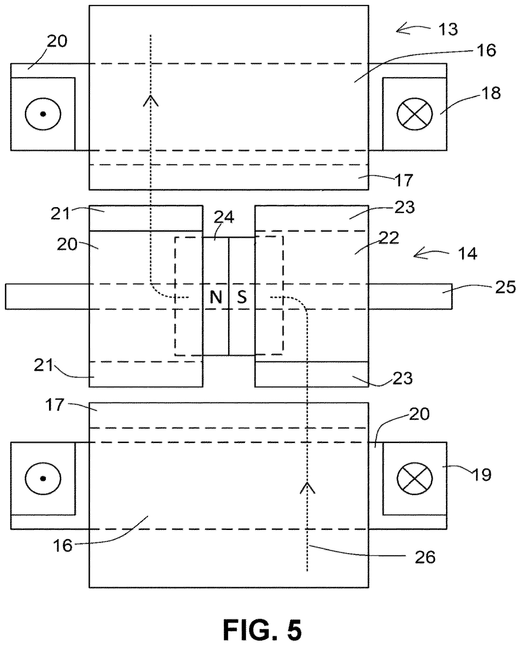

Die Figur 4 zeigt einen axialen Schnitt durch einen Hybridschrittmotor. Die Figur 5 zeigt einen transversalen Schnitt durch den Hybridschrittmotor aus Figur 4. Der Hybridschrittmotor umfasst einen Stator 13 und einen Rotor 14. Der Grundkörper 15 des Stators 13 besteht vorzugsweise vollständig aus Metall, damit der Hybridschrittmotor ein hohes Gewicht aufweist. Der Grundkörper 15 des Stators 13 kann aus einer Mehrzahl von Blechen bestehen, die zu einem Paket zusammengefasst sind. Die Bleche können durch Nieten miteinander verbunden sein.

Der Grundkörper 15 umfasst eine Mehrzahl von Segmenten 16. Die Segmente 16 stehen von einer Ringform des Grundkörpers 15 nach Innen ab. Die Außenkontur der Ringform kann wie in der Figur 4 gezeigt kreisrund sein. Die Außenkontur der Ringform kann aber auch beispielsweise eckig sein. Es können wie in der Figur 4 gezeigt vier Segmente 16 vorhanden sein. Es können aber auch zum Beispiel sechs oder acht Segmente 16 sein. Ein jedes Segment 16 weist an seinem nach Innen weisenden Ende eine Mehrzahl von Zähnen 17 auf. Ein jedes Segment 16 kann wie in der Figur 4 gezeigt jeweils drei Zähne 17 aufweisen. Es können aber auch mehr oder weniger als drei Zähne 17 pro Segment 16 vorhanden sein, also zum Beispiel zwei, vier oder fünf Zähne 17. Die Segmente mit den Zähnen bestehen aus einem magnetisierbaren Material. Es kann sich um ein ferromagnetisches Material handeln, welches beispielsweise überwiegend Eisen umfasst. Es kann sich aber auch um ein paramagnetisches Material handeln.

Um ein jedes Segment 16 herum ist jeweils eine Spule 18, 19 gewickelt. Damit die Wicklungen der Spulen 18, 19 gegenüber dem Grundkörper 15 im Bedarfsfall elektrisch isoliert sind, können elektrische Isolationskörper 20 vorhanden sein, die die Wicklungen der Spulen 18, 19 elektrisch von dem Grundkörper 15 trennen. Während des Betriebs fließt zu gegebener Zeit ein Strom durch eine Spule 18 entgegengesetzt zu einem Strom durch eine Spule 19, um den Rotor zu drehen. Die Richtung eines möglichen Stromflusses ist in der Figur 4 durch eine "•"- und "X" - Darstellung für eine jede Spule 18, 19 angedeutet.

Der Rotor 14 befindet sich innerhalb der Ringform des Stators 13. Der Rotor 14 umfasst einen ersten Rotationskörper 20, der mit ersten Zähnen 21 versehen ist, und einen zweiten Rotationskörper 22 (siehe Figur 5), der mit zweiten Zähnen 23 versehen ist. Die Rotationskörper 20, 22 können aus paramagnetischem Material bestehen. Ein ferromagnetisches Material ist aber für die Rotationskörper 20, 22 zu bevorzugen. Ein oder beide Rotationskörper 20, 22 können jeweils aus einer Mehrzahl von Blechen bestehen. Die Bleche eines Rotationskörpers können beispielsweise durch Nuten oder Schrauben miteinander verbunden sein. Ein oder beide Rotationskörper 20, 22 können alternativ jeweils einstückig gefertigt sein. Ein erster Zahn 21 ist zwischen zwei zweiten Zähnen 23 angeordnet und umgekehrt, wie dies in der Figur 4 zu sehen ist. Die Zähne 21, 23 des Rotors 14 grenzen an die Zähne 17 des Stators 13 so an, dass dazwischen ein schmaler Spalt verbleibt.

Die Zähne 21, 23 des Rotors 14 sind auf ihrer Oberseite vorzugsweise so nach außen gewölbt, dass die Oberseiten der Zähne 21, 23 in Aufsicht gesehen eine Ringform bilden, wie dies in der Figur 4 gezeigt wird. Die Oberseiten der Zähne 17 des Stators sind dann vorzugsweise dazu korrespondierend nach innen gewölbt. Dadurch kann ein besonders schmaler Spalt zwischen den Zähnen 17 des Stators 13 einerseits und den Zähnen 21, 23 des Rotors 14 andererseits eingestellt werden.

Die Figur 5 verdeutlicht, dass in den ersten Rotationskörper 20 der Nordpol N eines Permanentmagnets 24 hineinreicht und in den zweiten Rotationskörper 22 der Südpol S des Permanentmagneten 24 hineinreicht. Die ersten Zähne 21 wirken daher als magnetischer Nordpol und die zweiten Zähne 23 als magnetischer Südpol. In Aufsicht gesehen kann, wie in Figur 4 gezeigt, ein erster Zahn 21 unmittelbar an einen zweiten Zahn 23 angrenzen und an den zweiten Zahn 23 dann wieder unmittelbar ein nächster erster Zahn 21, so dass es in Aufsicht gesehen keine Zwischenräume zwischen ersten und zweiten Zähnen 21, 23 gibt.

Die Figur 4 verdeutlicht, dass zweite Zähne 23a durch die Zähne 17a der oberen Spule 18 durch Reluktanzkraft in die gezeigte fluchtende Stellung bewegt worden sind. Die Zähne 17a liegen dann den Zähnen 23a genau gegenüber. Außerdem sind erste Zähne 21a durch die Zähne 17b der unteren Spule 19 durch Reluktanzkraft in die dargestellte fluchtende Stellung bewegt worden. Die Zähne 17b liegen dann den Zähnen 21b genau gegenüber. Um dies zu erreichen, fließt der Strom durch die untere Spule 19 in umgekehrter Richtung im Vergleich zum Strom, der durch die obere Spule 18 fließt. Durch die seitlichen Spulen 18 und 19 fließt in dieser Zeit kein Strom.

Hat der Rotor 14 die in der Figur 4 gezeigte Stellung erreicht, dann wird der Stromfluss durch die obere Spule 18 und die untere Spule 19 unterbrochen und ein Strom fließt dann durch die seitlichen Spulen 18, 19 und zwar wiederum in entsprechend entgegengesetzter Richtung. Da die seitlich angeordneten Zähne 17 des Stators 13 gegenüber den seitlich liegenden Zähnen 21 und 23 des Rotors 14 versetzt angeordnet sind, wirkt eine Reluktanzkraft so auf den Rotor 14 ein, dass dieser entgegengesetzt zum Uhrzeigersinn weitergedreht wird.

Die Figur 5 zeigt, dass die Welle 25 des Hybridschrittmotors durch den Permanentmagneten 24 und die beiden Rotationskörper 20, 22 hindurchführen kann. Die Figur 5 zeigt exemplarisch einen Pfad 26 eines magnetischen Flusses, der während des Betriebs des Hybridschrittmotors auftreten kann. Der exemplarisch gezeigte Pfad verdeutlicht, dass der magnetische Fluss die ersten Zähne 21 und die zweiten Zähne 23 durchsetzt. Der magnetische Fluss verläuft durch die ersten Zähne 21 hindurch in Richtung Außenseite der ersten Zähne 21. Der magnetische Fluss verläuft durch die zweiten Zähne 23 hindurch in einer dazu umgekehrten Richtung, also von der Außenseite der zweiten Zähne 23 in Richtung der Innenseite der zweiten Zähne 23.

Es gibt eine nicht dargestellte Steuereinrichtung für den Hybridschrittmotor, der den Stromfluss wie zuvor beschrieben steuert.

Gemäß Figur 5 ist nur ein Permanentmagnet 24 vorhanden. Es können aber auch zwei und mehr Permanentmagnete vorhanden sein, die in die Rotationskörper 20, 22 hineinreichen.

## Patentansprüche

1. System umfassend eine Küchenmaschine und mindestens ein Gefäß (2) mit einem darin befindlichen Rührwerkzeug (5), wobei die Küchenmaschine einen elektrischen Antrieb für das Rührwerkzeug umfasst, **dadurch gekennzeichnet, dass** das System ein Rührgerät umfasst, und zwar mit einem Standteil (1), wobei das Gefäß (2) mit dem darin befindlichen Rührwerkzeug (5) sowohl als Gefäß (2) der Küchenmaschine als auch als Gefäß (2) des Rührgeräts eingesetzt sein kann, wobei das Gefäß (2) in das Standteil (1) des Rührgeräts eingesetzt werden kann, wobei das Standteil (1) des Rührgeräts einen elektrischen Antrieb für das Rührwerkzeug (5) umfasst, wobei die Küchenmaschine das Rührwerkzeug mit einer höheren Drehgeschwindigkeit drehen kann im Vergleich zu den Drehzahlen, die mit dem Rührgerät maximal möglich sind, wobei der elektrische Antrieb des Rührgeräts nur ein Schrittmotor ist.

2. System nach dem vorhergehenden Anspruch, **dadurch gekennzeichnet, dass** die Küchenmaschine das Rührwerkzeug (5) in zwei unterschiedliche Richtungen drehen kann.

3. System nach einem der beiden vorhergehenden Ansprüche, **dadurch gekennzeichnet, dass** Küchenmaschine und Rührgerät über Schnittstellen so miteinander verbunden werden können, dass diese Daten untereinander austauschen können.

4. System nach einem der drei vorhergehenden Ansprüche, **dadurch gekennzeichnet, dass** die Küchenmaschine eine Waage für ein Wiegen von Zutaten in dem Gefäß (2) umfasst und/oder eine Heizeinrichtung für ein Erhitzen des Gefäßes (2).

5. System nach einem der vier vorhergehenden Ansprüche, **dadurch gekennzeichnet, dass** das Gefäß (2) eine Heizeinrichtung umfasst.

## Claims

1. System comprising a food processor and at least one vessel (2) with a mixing tool (5) located therein, wherein the food processor comprises an electric drive for the mixing tool, **characterized in that** the system comprises a mixing device, namely having a standing part (1), wherein the vessel (2) with the mixing tool (5) located therein can be used both as vessel (2) of the food processor and as vessel (2) of the mixing device, wherein the vessel (2) can be inserted into the standing part (1) of the mixing device, wherein the standing part (1) of the mixing device comprises an electric drive for the mixing tool (5), wherein the food processor is able to rotate the mixing tool at a higher rotational speed than the maximum rotational speeds possible with the mixing device, wherein the electric drive of the mixing device is only a stepper motor.

2. System according to the preceding claim, **characterized in that** the food processor is able to rotate the mixing tool (5) in two different directions.

3. System according to one of the two preceding claims, **characterized in that** the food processor and the mixing device can be connected to each other via interfaces in such a way that they can exchange data with each other.

4. System according to one of the three preceding claims, **characterized in that** the food processor comprises a scale for weighing ingredients in the vessel (2) and/or a heating device for heating the vessel (2).

5. System according to one of the four preceding claims, **characterized in that** the vessel (2) comprises a heating device.

## Revendications

1. Système comprenant une machine de cuisine et au moins un récipient (2) avec un outil d'agitation (5) se trouvant à l'intérieur, dans lequel la machine de cuisine comprend un entraînement électrique pour l'outil d'agitation, **caractérisé en ce que** le système comprend un appareil d'agitation, et ce avec une partie de béquille (1), dans lequel le récipient (2) avec l'outil d'agitation (5) se trouvant à l'intérieur peut être utilisé aussi bien comme récipient (2) de la machine de cuisine que comme récipient (2) de l'appareil d'agitation, dans lequel le récipient (2) peut être inséré dans la partie de béquille (1) de l'appareil d'agitation, dans lequel la partie de béquille (1) de l'appareil d'agitation comprend un entraînement électrique pour l'outil d'agitation (5), dans lequel la machine de cuisine peut faire tourner l'outil d'agitation à une vitesse de rotation plus élevée par rapport aux vitesses de rotation qui sont possibles au maximum avec l'appareil d'agitation, dans lequel l'entraînement électrique de l'appareil d'agitation n'est qu'un moteur pas à pas.

2. Système selon la revendication précédente, **caractérisé en ce que** la machine de cuisine peut faire tourner l'outil d'agitation (5) dans deux directions différentes.

3. Système selon l'une des deux revendications précédentes, **caractérisé en ce que** la machine de cuisine et l'appareil d'agitation peuvent être reliés entre eux par des interfaces de manière à ce qu'ils puissent échanger des données entre eux.

4. Système selon l'une des trois revendications précédentes, **caractérisé en ce que** la machine de cuisine comprend une balance pour peser des ingrédients dans le récipient (2) et/ou un dispositif de chauffage pour chauffer le récipient (2).

5. Système selon l'une des quatre revendications précédentes, **caractérisé en ce que** le récipient (2) comprend un dispositif de chauffage.
